# FASCICULE DE BREVET EUROPEEN

(11) **EP 3 439 926 B1**
(45) Date de publication et mention de la délivrance du brevet: **25.03.2020**
(21) Numéro de dépôt: 17713309.7
(22) Date de dépôt: 28.03.2017
(51) Int. Cl.: B60S 1/08, B60S 1/48, B60S 1/52

(54) **DISPOSITIF DE DÉGIVRAGE ET/OU DE NETTOYAGE D'UNE VITRE DE VÉHICULE UTILISANT UN MOTEUR À ROTATION CONTINUE, MOTEUR À ROTATION CONTINUE ET PROCÉDÉ CORRESPONDANTS**
VORRICHTUNG ZUM ENTEISEN UND/ODER REINIGEN EINER FAHRZEUGFENSTERSCHEIBE MIT EINEM MOTOR MIT KONTINUIERLICHER ROTATION SOWIE ENTSPRECHENDER MOTOR MIT KONTINUIERLICHER ROTATION UND VERFAHREN
DEICING AND/OR CLEANING OF A VEHICLE WINDSHIELD USING A CONTINUOUSLY ROTATING MOTOR, A CONTINUOUSLY ROTATING MOTOR AND ASSOCIATED PROCESS

(30) Priorité: 08.04.2016 FR 1653088
(43) Date de publication de la demande: 13.02.2019
(73) Titulaire: Valeo Systèmes d'Essuyage, 78322 Le Mesnil Saint Denis (FR)
(72) Inventeur: THEBAULT, Denis, 63500 ISSOIRE (FR)
(74) Mandataire: Valeo Systèmes d'Essuyage
(86) Numéro de dépôt international: PCT/EP2017/057345
(87) Numéro de publication internationale: WO 2017/174407

(56) Documents cités:
- WO-A1-98/58826
- WO-A1-2014/198892
- FR-A1- 2 789 034

## Description

### DOMAINE TECHNIQUE

Le secteur technique de la présente invention est celui des dispositifs de dégivrage et/ou de nettoyage d'une vitre d'un véhicule, notamment automobile, utilisant des balais d'essuyage et des moyens de projection de liquide.

### ETAT DE L'ART

Les automobiles sont couramment équipées de systèmes d'essuyage et de lavage de vitres pour assurer un essuyage et un lavage des vitres et éviter ainsi que la vision qu'à le conducteur de son environnement ne soit perturbée. Une telle installation comprend généralement deux balais d'essuyage qui raclent la surface extérieure de la vitre, telle que le pare-brise, de manière à évacuer l'eau présente sur cette surface. Des gicleurs sont positionnés au niveau du capot du véhicule ou sur les balais, dans une version plus récente, et sont alimentés en liquide lave-glace par l'intermédiaire d'une pompe et d'un système de canalisations reliés à un réservoir de liquide lave-glace.

Certaines automobiles sont équipées de systèmes de dégivrage. Un système de dégivrage comprend en général un système d'essuyage et de lavage classique du type précité, auquel peut être associé, en plus, un réservoir de liquide de dégivrage voire une pompe supplémentaire. Dans le but de dégivrer une vitre par temps froid, les gicleurs sont alimentés en liquide de dégivrage par l'intermédiaire de la pompe et du système de canalisations reliés au réservoir de liquide de dégivrage.

La Demanderesse a déjà proposé des systèmes et des dispositifs de dégivrage, décrits notamment dans le document FR-A1-2 789 034, qui utilisent des moteurs commandés électroniquement, par exemple fonctionnant pas à pas, capables d'effectuer un balayage du pare-brise par secteur angulaires successifs, avec des arrêts et en modulant la vitesse de balayage.

Le document WO 98/58826 A1 montre un dispositif de dégivrage et/ou de nettoyage d'insectes d'une vitre de véhicule selon le préambule de la première revendication et un moteur pour un dispositif d'essuyage selon le préambule de la revendication 8.

Avec l'utilisation de cette technologie, il est possible de définir des programmes de dégivrage dans lesquels, notamment, la montée des balais sur la vitre s'effectue en une série de pas angulaires successifs avec projection de liquide de dégivrage, laissant au liquide de dégivrage le temps d'agir pour assurer une excellente reprise de visibilité pour des températures extérieures descendant au moins jusqu'à -20°C.

Le même dispositif peut également être utilisé, en adaptant les paramètres du programme et avec un liquide approprié, pour nettoyer un pare-brise sur lequel sont collés des moustiques. Dans ce cas, en effet, le liquide agit de manière similaire pour dissoudre et/ou décoller les salissures dues aux moustiques écrasés sur le pare-brise, pour permettre ensuite leur évacuation par un essuyage.

L'efficacité du programme de dégivrage ou de nettoyage des insectes repose ici en particulier sur la possibilité d'arrêter le moteur des balais d'essuie-glace, ou du moins d'en contrôler finement la vitesse, pour faire agir le liquide spécifique, de dégivrage ou de nettoyage des insectes. Ces moteurs et leurs dispositifs de commande sont cependant relativement chers et leur installation n'est pas prévue sur des modèles de véhicules d'entrée de gamme.

Il existe donc un besoin d'obtenir des résultats équivalent avec des dispositifs utilisant un moteur à rotation continue, non commandé électroniquement, pour des véhicules d'entrée de gamme.

L'invention apporte une solution à ce besoin, qui est simple, efficace et économique.

### EXPOSE DE L'INVENTION

L'invention propose à cet effet un dispositif de dégivrage et/ou de nettoyage d'insectes d'une vitre de véhicule agencé pour effectuer au moins une fonction d'essuyage de la vitre et comprenant :
a. au moins un balai d'essuyage apte à se déplacer sur ladite vitre entre une position basse et une position haute,
b. un moteur à rotation continue agencé pour entraîner en rotation ledit au moins un balai selon au moins un premier niveau correspondant à une première vitesse d'essuyage, dite rapide, et un deuxième niveau à une deuxième vitesse d'essuyage, dite lente et inférieure à la première, de manière à effectuer la fonction de balayage,
c. un système de projection d'un liquide spécifique, de dégivrage ou de nettoyage des insectes, sur la vitre,
   caractérisé en ce que le moteur à rotation continue est agencé de manière à fonctionner à une troisième vitesse, dite très lente, inférieure à la deuxième vitesse, et en ce que le dispositif est configuré pour faire effectuer audit balai au moins une descente de la position haute jusqu'à la position basse et/ou au moins une montée de la position basse jusqu'à la position haute avec le moteur fonctionnant à la troisième vitesse et avec ledit système de projection activé sur au moins une partie de ladite descente et/ou de la montée.

La troisième vitesse, très lente, permet d'effectuer un balayage de la vitre avec une vitesse permettant au balai d'essuyage de rester suffisamment longtemps à proximité des zones qu'il traverse sur la vitre pour que le liquide actif puisse agir.

Préférentiellement, la troisième vitesse prend une valeur comprise sensiblement entre quinze et vingt-cinq cycles par minute.

Encore plus préférentiellement, la troisième vitesse prend une valeur inférieure ou égale à vingt cycles par minute, de préférence égale à quinze cycles par minute.

De préférence, le système de projection d'un liquide est agencé pour projeter ledit liquide sur la vitre sensiblement le long dudit au moins un balai d'essuyage.

Avantageusement, le système de projection d'un liquide comporte des orifices de projection dudit liquide sur la vitre portés par ledit au moins un balai d'essuyage ou un élément se déplaçant avec ledit balai d'essuyage. On profite ainsi du déplacement du balai d'essuyage pour projeter le liquide sur toute la surface de la vitre balayée par le balai.

Avantageusement, le système de projection de liquide spécifique comprend :
a. au moins un réservoir contenant un liquide spécifique, de dégivrage ou de nettoyage des insectes,
b. un système de canalisations reliant ledit au moins un réservoir aux orifices,
c. une pompe destinée à faire circuler ledit liquide dans le système de canalisations jusqu'à son éjection par lesdits orifices.

Le dispositif peut être agencé en outre pour projeter un deuxième liquide, non spécifique, lorsque ledit au moins un balai est entraîné par ledit moteur à rotation continue fonctionnant à la première vitesse d'essuyage ou la deuxième vitesse d'essuyage, de manière à effectuer une fonction de lavage.

Le dispositif peut comprendre un boîtier électronique de commande agencé pour commander le moteur et le système de projection de liquide spécifique.

L'invention concerne également un moteur à rotation continue pour un dispositif d'essuyage et de nettoyage d'une vitre de véhicule, ledit dispositif comportant au moins un balai d'essuyage apte à se déplacer sur ladite vitre entre une position basse et une position haute, ledit moteur étant destiné à entraîner ledit balai d'essuyage dudit dispositif par la rotation d'un rotor à une vitesse donnée, ledit rotor étant équipé de moyens de commutation, destinés à alimenter des spires conductrices du rotor à partir d'une source de courant continu fixant un potentiel déterminé, lesdits moyens de commutation étant agencés pour faire fonctionner ledit moteur selon un nombre fini de niveaux de vitesse déterminés, ledit moteur étant configuré pour que lesdits niveaux de vitesse comprennent au moins un premier niveau correspondant à une première vitesse d'essuyage, dite rapide, et un deuxième niveau à une deuxième vitesse d'essuyage, dite lente et inférieure à la première, caractérisé en ce que lesdits niveaux comportent au moins un troisième niveau correspondant à une troisième vitesse, inférieure à la deuxième vitesse.

Préférentiellement, ledit moteur est configuré de manière à ce que la troisième vitesse prenne une valeur comprise sensiblement entre quinze et vingt-cinq cycles par minute, et, encore plus préférentiellement, de manière à ce que la troisième vitesse prenne une valeur inférieure ou égale à vingt cycles par minute. De préférence, la troisième vitesse est égale à quinze cycles par minutes. Avantageusement, il est configuré de manière à ce que la deuxième vitesse prenne une valeur au moins égale à trente cycles par minute.

Selon un mode de réalisation préféré dudit moteur, lesdits moyens de commutation comprennent un collecteur lié aux spires conductrices du rotor et des balais de connexion destinés à être reliés à ladite source de courant continu et ayant pour fonction de transmettre un courant au collecteur, un premier et un deuxième balais de connexion étant diamétralement opposés et le moteur étant agencé pour fonctionner à la troisième vitesse lorsque lesdits premier et deuxième balais sont connectés respectivement à une première et une deuxième borne de ladite source de courant continu.

De préférence, le moteur à rotation continue comprend un troisième balai de connexion et un quatrième balai de connexion destinés à être connectés à la deuxième borne de la source de courant continu, le troisième balai de connexion et le quatrième balai de connexion étant décalés de manière successive vers le premier balai de connexion par rapport au deuxième balai de connexion, en suivant la circonférence du collecteur.

L'invention concerne aussi un procédé de dégivrage d'une vitre de véhicule, ledit véhicule étant équipé d'un dispositif de dégivrage tel que décrit précédemment, comportant une étape 2) durant laquelle ledit balai effectue au moins une descente de la position haute jusqu'à la position basse avec le moteur fonctionnant à la troisième vitesse et avec le système de projection d'un liquide spécifique activé sur au moins une partie de ladite descente, de manière à étaler le liquide spécifique sur la vitre entre la position haute et la position basse ou une étape 2') durant laquelle ledit balai effectue au moins une montée de la position basse jusqu'à la position haute avec le moteur fonctionnant à la troisième vitesse et avec le système de projection d'un liquide spécifique activé sur au moins une partie de ladite montée, de manière à étaler le liquide spécifique sur la vitre entre la position basse et la position haute.

De préférence, le procédé comprend durant l'étape 2) une montée du balai de la position basse à la position haute effectuée avant la descente, avec le moteur fonctionnant à la troisième vitesse et avec le système de projection d'un liquide spécifique désactivé depuis la position basse jusqu'à au moins une position proche de la position haute.

De préférence, l'étape 2) est précédée d'une étape 1) durant laquelle le moteur est arrêté et qui comporte une phase de projection de liquide spécifique suivie d'une phase de pause de durée donnée, de manière à dissoudre une éventuelle matière collant ledit balai sur la vitre.

### DESCRIPTION DES FIGURES

D'autres caractéristiques et avantages de l'invention apparaîtront à la lecture de la description qui suit et d'exemples de réalisation donnés à titre illustratif en référence aux figures annexées. Sur ces figures :
- la figure 1 est une vue schématique d'un dispositif de lavage et de dégivrage d'une vitre, ici de véhicule automobile ;
- la figure 2 présente une vue schématique de face d'un moteur à rotation continue selon l'art antérieur ;
- la figure 3 présente une vue schématique de face d'un moteur à rotation continue suivant l'invention pouvant être utilisé dans un dispositif de la figure 1 ; et
- les figures 4a et 4b sont des vues schématiques montrant un cycle de dégivrage de la vitre selon l'invention.

### DESCRIPTION DETAILLEE

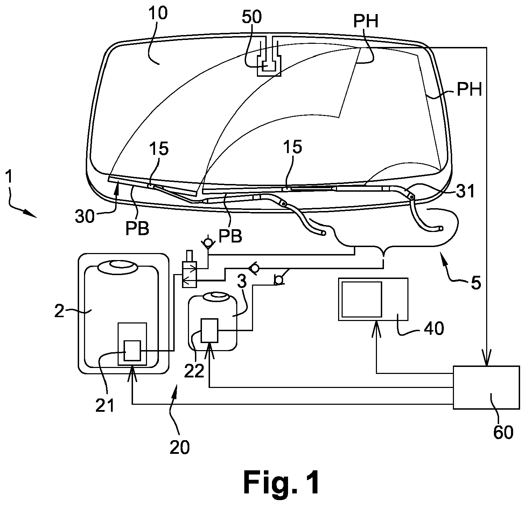

L'invention concerne un dispositif 1 de dégivrage appliqué sur une vitre, telle qu'un pare-brise 10 de véhicule automobile, tel que celui illustré à la figure 1. De préférence, le dispositif 1 est agencé pour pouvoir également nettoyer des insectes collés sur le pare-brise 10, comme cela est décrit ci-après.

Un tel dispositif comprend généralement un premier réservoir 2 et au moins un deuxième réservoir 3.

Le premier réservoir 2 contient un liquide de lavage utilisé pour faire exécuter par le dispositif une fonction de lavage standard lorsque la vue au travers du pare-brise 10 est gênée par des salissures faciles à nettoyer.

Le deuxième réservoir 3 contient par exemple un liquide de dégivrage pour faire exécuter par le dispositif une fonction de dégivrage. Le deuxième réservoir 3 peut se présenter sous la forme d'un réservoir fixe au véhicule muni d'un goulot de remplissage. Avantageusement, le deuxième réservoir 3 se présente sous la forme d'une cartouche amovible. Il est ainsi possible, par exemple en changeant la cartouche, de remplacer le liquide de dégivrage par un liquide comprenant un détergent spécifique adapté au nettoyage des insectes. Que le deuxième réservoir 3 soit fixe ou se présente sous la forme d'une cartouche amovible , le deuxième réservoir 3 contient un liquide spécifique, généralement plus onéreux que le liquide de lavage du premier réservoir 2 et destiné à être utilisé moins souvent.

Le dispositif de lavage 1 comprend également un système de canalisations 5 reliant le premier réservoir 2 et le deuxième réservoir 3 à des orifices 15, pouvant être formés par des gicleurs, par lesquels sont éjectés du liquide de lavage et/ou du liquide spécifique sur le pare-brise 10.

Il comprend en outre un système de pompe 20 destiné à faire circuler du liquide de lavage et/ou du liquide spécifique dans le système de canalisations 5 jusqu'à éjection par les orifices 15. Le système de pompe 20 comprend ici deux pompes 21, 22 indépendantes. Une première pompe 21 est associée au premier réservoir 2 et est destinée à faire circuler du liquide de lavage dans le système de canalisations 5 et une deuxième pompe 22 est associée au deuxième réservoir 3 et est destinée à faire circuler du liquide spécifique dans le système de canalisations 5.

La première 21 et la deuxième 22 pompes sont, par exemple, mues par des moteurs à courant continu et sont agencées pour pouvoir fonctionner à au moins un niveau de puissance donné pendant des durées choisies, afin de faire circuler un débit de liquide adapté aux cycles de fonctionnement du dispositif 1, tels qu'ils seront décrits par la suite.

Le dispositif de dégivrage 1 comprend au moins un balai d'essuyage 30 monté sur un bras 31 et apte à se déplacer sur le pare-brise 10 entre une position basse PB et une position haute PH, et inversement. Dans l'exemple représenté, le dispositif 1 comprend deux balais d'essuyage 30.

Selon une première variante, les gicleurs peuvent être situés le long des balais d'essuie-glace 30 uniquement en regard de la position extrême haute d'essuyage PH. Dans ce cas, la projection de liquide peut s'effectuer uniquement dans le sens de la montée de la position basse PB vers la position haute PH, uniquement dans le sens de la descente de la position haute PH vers la position basse PB, ou aussi bien dans le sens de la montée que dans le sens de la descente.

Selon une deuxième variante, le système peut être mis en œuvre avec des gicleurs situés des deux côtés longitudinaux des balais d'essuie-glace. Comme décrit ci-dessus, la projection de liquide peut s'effectuer alors soit uniquement dans le sens de la montée de la position basse PB vers la position haute PH, soit uniquement dans le sens de la descente de la position haute PH vers la position basse PB, ou dans les deux sens, c'est-à-dire selon le sens de la montée et selon le sens de la descente. La projection de liquide est effectuée alors à l'aide des gicleurs disposés face au côté d'avancement ou opposés au côté d'avancement selon l'effet recherché.

De manière à profiter du déplacement des balais d'essuyage 30 pour projeter du liquide sensiblement sur la totalité de la surface de pare-brise 10 qu'ils balayent, les gicleurs 15 peuvent être répartis sur la longueur de chaque balai d'essuyage 30. Dans une variante, il est possible d'installer un ou des gicleurs sur le bras 31, par exemple agencés pour projeter le liquide tout le long du balai d'essuyage 30 à partir d'une position centrale ou pour projeter le liquide directement sur le pare-brise.

Le dispositif 1 comprend également un moteur 40 destiné à entraîner les balais d'essuyage 30 entre leurs positions basses PB et leurs positions hautes PH respectives. Le moteur 40 est ici un moteur à rotation continue. De manière connue, en tournant à une vitesse Ω sensiblement constante, il entraîne par un système de tringlerie, non représenté, les balais 30 dans un mouvement de va-et-vient entre leur position basse PB et leur position haute PH. Généralement, sur un tour du moteur 40, chaque balai 30 fait un cycle d'aller-et-retour à la position basse PB. La vitesse Ω du moteur 40 est ainsi généralement caractérisée en nombre de cycles par minute (cpm).

On rappelle ici que le dispositif 1 qui est décrit, en particulier dans le cas d'un pare-brise 10, doit remplir une première fonction qui est d'essuyer le pare-brise 10 devant le conducteur en cas de pluie pour lui assurer une bonne visibilité. C'est donc un équipement affectant la sécurité de conduite. Le dispositif 1 doit donc respecter certains critères afin d'assurer cette sécurité. En ce qui concerne les balais 30, la vitesse de balayage Ω est l'un de ces critères. Notamment, selon une norme européenne (CE118318) sur les dispositifs de nettoyage des pare-brises, le moteur 40 à rotation continue doit permettre le balayage à deux vitesses, une vitesse rapide d'essuyage (HWS pour High Wipping Speed) et une vitesse lente d'essuyage (LWS pour Low Wipping Speed). Ces deux vitesses doivent se trouver dans des fourchettes de valeurs déterminées et être séparées d'au moins 15cpm (quinze cycles par minute). Typiquement, pour l'exemple considéré, le moteur 40 est conçu pour tourner à une vitesse rapide HWS dont la valeur est Ω1=60cpm, et à une vitesse lente LWS dont la valeur est Q2=40cpm.

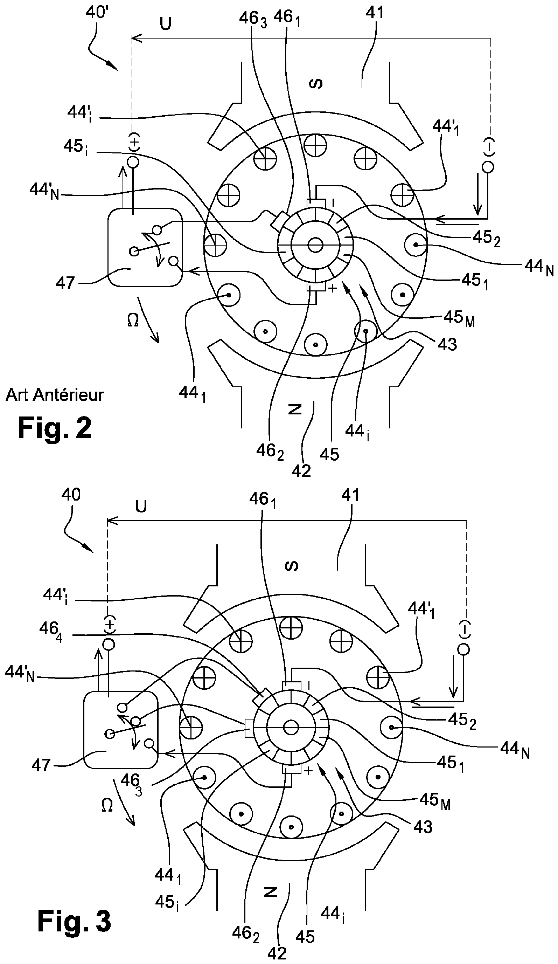

En référence à la figure 2, un moteur 40' à rotation continue selon l'état de la technique, tel qu'utilisé pour entraîner des balais d'essuyage 30 aux vitesses d'essuyage lente LWS et rapide HWS, comprend avantageusement un stator inducteur d'un champ magnétique, formé sur l'exemple par un aimant permanent 41 - 42, et un rotor 43 comprenant, sur l'exemple, deux fois N conducteurs 44₁-44_{N}, 44'₁-44'_{N} sensiblement parallèles à l'axe du rotor 43 et répartis sur sa circonférence. Le rotor 43 comprend, de plus, un collecteur 45, supportant une couronne de M lamelles 45₁-45_{M}, isolées les unes par rapport aux autres. Des fils conducteurs, non représentés, connectent les conducteurs 44₁-44_{N}, 44'₁-44'_{N}, directement entre eux à l'une de leurs extrémités et aux lamelles 45₁-45_{M} à l'autre de leurs extrémités, de manière à former des spires conductrices 44ᵢ-44'ᵢ entre une première série de conducteurs 44₁-44ₙ et une deuxième série de conducteurs 44'₁-44'_{N}.

Ici, le moteur 40' est connecté aux deux bornes d'une source de courant assurant une différence de potentiel U, par un circuit comprenant trois balais de connexion. Un premier balai de connexion 46₁ est connecté à une première borne de potentiel et est positionné de manière à frotter contre les lamelles 45ᵢ quand le rotor 43 tourne pour assurer le contact avec chacune, une par une. Un deuxième balai de connexion 46₂ et un troisième 46₃ sont également positionnés contre la circonférence du collecteur 45, de manière à frotter contre les lamelles 45ᵢ. Le deuxième balai de connexion 46₂ est placé de manière diamétralement opposée au premier balai 46₁, le troisième 46₃ est placé de manière décalée sur la circonférence du collecteur 45, entre le premier 46₁ et le deuxième 46₂ balai de connexion. Les deuxième 46₂ et troisième 46₃ balais de connexion sont ici reliés à la deuxième borne de potentiel par un commutateur 47 qui permet de connecter l'un ou l'autre.

Le circuit électrique entre les conducteurs 44ᵢ et les lamelles 45ᵢ du rotor 43 est généralement configuré de telle sorte que le courant électrique I passe dans l'ensemble des spires conductrices 44ᵢ-44'ᵢ du rotor 43 lorsque le deuxième balai de connexion 46₂ est connecté à la deuxième borne de potentiel. C'est la commutation des connexions des premier 46₁ et deuxième 46₂ balais de connexion avec les lamelles 45ᵢ qui passent devant eux qui entraîne le fait que le courant I passe toujours dans le même sens dans les conducteurs 44₁-44_{N}, 44'₁-44'_{N} lorsqu'ils se trouvent en une position donnée par rapport au champ magnétique : sur la figure 2, vers l'avant pour les conducteurs 44₁-44_{N}, se trouvant dans la moitié basse du moteur 40 et vers l'arrière pour les conducteurs 44'₁-44'_{N}, se trouvant dans la moitié haute. L'interaction entre le courant I passant dans les conducteurs 44₁-44_{N}, 44'₁-44'_{N} et le champ magnétique induit par le stator 41-42 crée le couple qui met le rotor 43 en rotation à la vitesse Ω.

La taille des bobinages des conducteurs 44ᵢ-44'ᵢ, en particulier, est alors adaptée pour que le moteur tourne à la valeur Ω2 de la vitesse lente d'essuyage LWS compte tenu du champ magnétique induit par le stator 41-42.

Par ailleurs, la configuration du circuit électrique passant par les conducteurs 44₁-44_{N}, 44'₁-44'_{N} et les lamelles 45₁-45_{M}, de même que la position du troisième balai de connexion 46₃, est agencé pour que, lorsque c'est le troisième balai de connexion 46₃ qui est connecté à la deuxième borne de potentiel, le courant I ne passe pas dans un certain nombre de spires conductrices 44ᵢ-44'ᵢ formées par les conducteurs du rotor 43. Dans ce cas, pour une même différence de potentiel U appliquée aux bornes, le moteur 40' tourne à la vitesse rapide d'essuyage HWS de valeur Ω1, avec une intensité du courant I plus élevée.

En comparaison, le moteur 40 selon l'invention, représenté en figure 3, est conçu pour pouvoir fonctionner à la valeur Ω2 de la vitesse lente d'essuyage LSW et à la valeur Ω1 de la vitesse rapide d'essuyage HSW, et, en plus, à une troisième vitesse très lente (appelé ici CS pour cleaning Speed), dont la valeur Ω3 est nettement inférieure à la valeur Ω2 de la vitesse lente d'essuyage LWS. Typiquement, cette vitesse très lente CS a une valeur Ω3 prise dans une fourchette [15cpm ; 25cpm], de préférence égale à 15cpm. Comme on le verra plus loin dans la description d'un cycle de dégivrage et/ou de nettoyage, cette vitesse très lente CS est nécessaire pour laisser le temps au liquide spécifique de se déposer lorsqu'il est éjecté par les orifices 15 disposés sur le balai 30. De plus, il est apparu que la fourchette de valeurs dans laquelle doit se trouver la vitesse lente d'essuyage LWS est trop élevée pour assurer cette fonction.

En référence à la figure 3, où les mêmes numéros que ceux la figure 2 sont repris pour les éléments ayant les mêmes fonctions, un moteur 40 selon l'invention comprend un quatrième balai de connexion 46₄. Le deuxième balai de connexion 46₂ est toujours ici diamétralement opposé au premier 46₁, les troisième 46₃ et quatrième 46₄ balais de connexion étant décalés par rapport au deuxième 46₂ sur la circonférence du collecteur 45.

Ainsi, le premier balai de connexion 46₁ et le deuxième balai de connexion 46₂ sont diamétralement opposés. Le troisième balai de connexion 46₃ et le quatrième balai de connexion 46₄ s'étendent sur le même demi-cercle entre le premier balai de connexion 46₁ et le deuxième balai de connexion 46₂. Le quatrième balai de connexion 46₄ s'étend entre le troisième balai de connexion 46₃ et le premier balai de connexion 46₁

Ici, le moteur 40 est conçu de manière à tourner à la valeur Ω3 de la vitesse très lente CS lorsque le deuxième balai de connexion 46₂ est connecté à la deuxième borne de potentiel. Par rapport au moteur 40', pour passer d'une vitesse de 40cpm à 20 cpm par exemple, il faut alors soit doubler le nombre de spires conductrices 44ᵢ-44'ᵢ formées par les conducteurs du rotor 43, soit doubler la valeur du champ magnétique induit par le stator 41-42.

Ensuite, le troisième balai de connexion 46₃ est décalé de manière à court-circuiter un nombre suffisant de spires conductrices 44ᵢ-44'ᵢ pour que la vitesse de rotation du rotor 43 prenne la valeur Ω2 de la vitesse lente d'essuyage LWS. Le quatrième balai de connexion 46₄ est encore un peu plus décalé sur la circonférence du collecteur 45 vers le premier balai de connexion 46₁ pour diminuer encore le nombre de spires conductrices 44ᵢ-44'ᵢ parcourues par le courant I et obtenir la valeur Ω1 de la vitesse rapide d'essuyage HWS pour le rotor 43.

Par ailleurs, le commutateur 47 permet ici de connecter l'un ou l'autre des deuxième 46₂, troisième 46₃ et quatrième 46₄ balais de connexion à la deuxième borne de potentiel. Il comporte donc trois positions correspondant chacune à l'une des valeurs Ω1, Ω2, Ω3 de la vitesse de rotation du moteur 40, plus une position neutre, dans laquelle aucun courant ne passe et le moteur 40 est à l'arrêt. Sur cet exemple, le moteur 40 est commandé de manière simple en mettant le commutateur sur une position donnée pendant un laps de temps donné.

Généralement, le dispositif 1 comprend en outre un boîtier électronique 60 capable de commander le moteur 40 d'entraînement des balais d'essuyage 30 et l'activation du système de pompe 20, les pompes 21, 22 pouvant être commandées de manière indépendante. Ici, le boîtier électronique 60 envoie essentiellement des ordres de commutation au moteur 40 et aux pompes 21, 22, suivant des séquences déterminées pour faire effectuer les cycles souhaités.

Le dispositif 1 peut comprendre en outre un capteur 50 de température extérieure du véhicule. Il est situé ici sur une partie haute du pare-brise 10, au centre de celui-ci, sans que cette position ne soit limitative. Le capteur 50 peut être directement exposé à l'air ambiant extérieur du véhicule et est destiné à mesurer la température extérieure, par exemple dans une plage de valeurs allant de -50°C à +50°C. Ses informations peuvent être utilisées par le boîtier de contrôle pour adapter les paramètres des cycles effectués.

On va maintenant décrire un exemple de la façon dont le dispositif 1 peut fonctionner avec le moteur 40 à rotation continue pour réaliser la fonction de dégivrage.

La fonction de dégivrage s'effectue normalement lorsque le véhicule est à l'arrêt. En effet, il s'agit d'enlever du givre empêchant le conducteur de voir au travers du pare-brise, donc de conduire le véhicule. Le conducteur peut demander le lancement de cette fonction par des commandes installées dans le véhicule ou en étant à distance, par exemple en envoyant un message par son téléphone mobile à un module de télécommunication relié au dispositif 1.

Le cycle de dégivrage peut commencer par une première étape, comprenant une phase de projection du liquide de dégivrage en maintenant les balais 30 dans la position où ils se trouvent, le boîtier de commande 60 actionnant la deuxième pompe 21 sans actionner le moteur 40.

Une phase d'attente, généralement de quelques secondes suit la phase de projection pour laisser le temps au liquide de dégivrage de faire fondre le givre et libérer les balais 30 qui peuvent être collés au pare-brise 10 par le givre.

Généralement, les balais se trouvent dans la position basse PB lorsque l'on veut lancer le cycle. Ils sont donc prêts pour démarrer la deuxième étape.

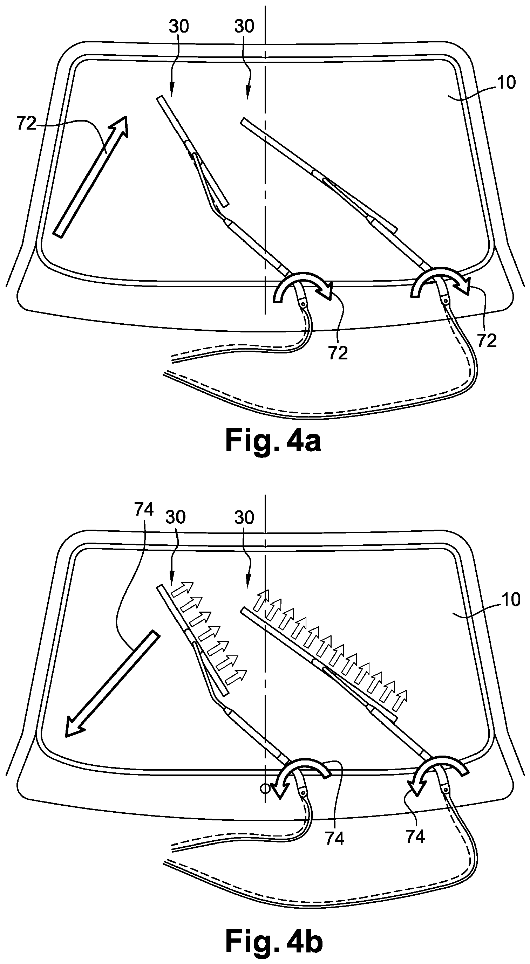

En référence aux figures 4a et 4b, la deuxième étape comporte une phase de montée de la position basse PB vers la position haute PH, représenté par la référence 72, sans projection de liquide de dégivrage et une phase de descente, représenté par la référence 74, retournant à la position basse PB, avec projection du liquide de dégivrage. La montée et la descente s'effectuent en utilisant la vitesse très lente CS du moteur 40 à rotation continue. Lors de la descente, la projection de liquide spécifique s'effectue à l'opposé du côté d'avancement des balais 30, c'est-à-dire en direction de la position haute PH.

Pour effectuer cette deuxième étape, le boîtier de commande 60 place le commutateur 47 en position pour connecter le deuxième balai de connexion 46₂ puis replace le commutateur 47 en position neutre après une temporisation correspondant au temps d'un cycle aller-retour à la vitesse très lente Ω3. En parallèle, une autre temporisation du boîtier de commande attend sensiblement un demi-cycle avant de lancer la deuxième pompe 22, de manière à faire coïncider la projection du liquide de dégivrage avec la phase de descente des balais 30.

Comme évoqué précédemment, la vitesse très lente CS permet un étalement continu et homogène du liquide de dégivrage sur la surface balayée par les balais 30. La plage de valeurs Ω3 de cette vitesse très lente, entre 15 et 20 cpm apparaît comme un compromis intéressant entre le fait de ne pas aller trop vite pour l'étalement du liquide et celui de garder une durée acceptable pour le cycle de dégivrage. Le liquide de dégivrage peut ainsi se répartir correctement sur le pare-brise 10 et commencer à agir sur le givre.

Généralement, le cycle comprend au moins une étape de pause, lorsque les balais 30 sont revenus à leur position basse PB. La durée de cette étape de pause est déterminée pour laisser au liquide de dégivrage le temps de faire fondre le givre.

A la fin de cette étape de pause, le conducteur peut, si nécessaire, lancer des cycles de la fonction essuyage pour débarrasser le pare-brise de l'eau liquide présente sur le pare-brise.

Alternativement, le boitier de commande 60 peut être configuré pour lancer automatiquement un cycle de rinçage à l'aide de la pompe 21 à la vitesse lente d'essuyage (LWS).

Dans le cas du nettoyage d'insectes, le cycle suivi par le dispositif 1 peut être le même que pour le dégivrage. La différence réside dans le liquide spécifique, adapté au nettoyage d'insectes, qui est présent dans le deuxième réservoir 3. La sélection entre la fonction de dégivrage et la fonction de nettoyage d'insectes pourra donc être faite en fonction de la saison, par exemple en changeant la cartouche du deuxième réservoir 3. Dans une variante, certains paramètres, comme les durées des phases d'attente ou de pause du cycle, peuvent être adaptés à l'action du liquide de nettoyage des insectes.

## Revendications

1. Dispositif (1) de dégivrage et/ou de nettoyage d'insectes d'une vitre (10) de véhicule agencé pour effectuer au moins une fonction d'essuyage de la vitre et comprenant :
a. au moins un balai (30) d'essuyage apte à se déplacer sur ladite vitre (30) entre une position basse (PB) et une position haute (PH),
b. un moteur à rotation continue (40) agencé pour entraîner en rotation ledit au moins un balai (30) selon au moins un premier niveau correspondant à une première vitesse d'essuyage, dite rapide (HWS), et un deuxième niveau à une deuxième vitesse d'essuyage, dite lente (LWS) et inférieure à la première, de manière à effectuer la fonction de balayage,
c. un système de projection d'un liquide spécifique, de dégivrage ou de nettoyage des insectes, sur la vitre (10),
**caractérisé en ce que** le moteur à rotation continue est agencé de manière à fonctionner à une troisième vitesse (CS), dite très lente, inférieure à la deuxième vitesse et **en ce que** le dispositif est configuré pour faire effectuer audit balai (30) au moins une descente de la position haute (PH) jusqu'à la position basse (PB) et/ou au moins une montée de la position basse (PB) jusqu'à la position haute (PH) avec le moteur (40) fonctionnant à la troisième vitesse (CS) et avec ledit système de projection activé sur au moins une partie de ladite descente et/ou de la montée.

2. Dispositif selon la revendication précédente, dans lequel la troisième vitesse (CS) prend une valeur (Ω3) comprise sensiblement entre quinze et vingt-cinq cycles par minute, plus particulièrement inférieure ou égale à vingt cycles par minute, de préférence égale à quinze cycles par minute.

3. Dispositif selon l'une des revendications précédentes, dans lequel le système de projection d'un liquide est agencé pour projeter ledit liquide sur la vitre (10) sensiblement le long dudit au moins un balai d'essuyage (30).

4. Dispositif selon la revendication précédente, dans lequel le système de projection d'un liquide comporte des orifices (15) de projection dudit liquide sur la vitre (10) portés par ledit au moins un balai d'essuyage (30) ou un élément (31) se déplaçant avec ledit balai d'essuyage.

5. Dispositif selon la revendication précédente, dans lequel le système de projection de liquide spécifique comprend :
a. au moins un réservoir (3) contenant un liquide spécifique, de dégivrage ou de nettoyage des insectes,
b. un système de canalisations (5) reliant ledit au moins un réservoir (3) aux orifices (15),
c. une pompe (22) destinée à faire circuler ledit liquide dans le système de canalisations (5) jusqu'à son éjection par lesdits orifices (15).

6. Dispositif selon l'une des revendications précédentes, agencé en outre pour projeter un deuxième liquide, non spécifique, lorsque ledit au moins un balai (30) est entraîné par ledit moteur à rotation continue fonctionnant à la première vitesse d'essuyage (HWS) ou la deuxième vitesse d'essuyage (LWS), de manière à effectuer une fonction de lavage.

7. Dispositif selon l'une des revendications précédentes, comportant un boîtier électronique (60) de commande agencé pour commander ledit moteur (40) et ledit système de projection de liquide spécifique.

8. Moteur (40) à rotation continue pour un dispositif (1) d'essuyage et de nettoyage d'une vitre de véhicule, ledit dispositif comportant au moins un balai (30) d'essuyage apte à se déplacer sur ladite vitre (30) entre une position basse (PB) et une position haute (PH), ledit moteur (40) étant destiné à entraîner ledit balai d'essuyage (30) dudit dispositif par la rotation d'un rotor (43) à une vitesse donnée, ledit rotor étant équipé de moyens de commutation (46₁-46₄ ; 45), destinés à alimenter des spires conductrices (44ᵢ-44'ᵢ) du rotor (43) à partir d'une source de courant continu fixant un potentiel (U) déterminé, lesdits moyens de commutation étant agencés pour faire fonctionner ledit moteur selon un nombre fini de niveaux de vitesse déterminés, ledit moteur étant configuré pour que lesdits niveaux de vitesse comprennent au moins un premier niveau correspondant à une première vitesse d'essuyage, dite rapide (HWS), et un deuxième niveau à une deuxième vitesse d'essuyage, dite lente (LWS) et inférieure à la première, **caractérisé en ce que** lesdits niveaux comportent au moins un troisième niveau correspondant à une troisième vitesse (CS), inférieure à la deuxième vitesse.

9. Moteur (40) à rotation continue selon la revendication précédente, configuré de manière à ce que la troisième vitesse (CS) prenne une valeur (Ω3) comprise sensiblement entre quinze et vingt-cinq cycles par minute, plus particulièrement inférieure ou égale à vingt cycles par minute, de préférence égale à quinze cycles par minute

10. Moteur (40) à rotation continue selon l'une des revendications 8 à 9, configuré de manière à ce que la deuxième vitesse (LWS) prenne une valeur (Ω2) au moins égale à trente cycles par minute.

11. Moteur (40) à rotation continue selon l'une des revendications 8 à 10, dans lequel lesdits moyens de commutation comprennent un collecteur (45) lié aux spires conductrices (44ᵢ-44'ᵢ) du rotor (43) et des balais de connexion destinés à être reliés à ladite source de courant continu et ayant pour fonction de transmettre un courant au collecteur (45), un premier (46₁) et un deuxième (46₂) balais de connexion étant diamétralement opposés et le moteur (40) étant agencé pour fonctionner à la troisième vitesse (CS) lorsque lesdits premier (46₁) et deuxième (46₂) balais sont connectés respectivement à une première et une deuxième borne de ladite source de courant continu.

12. Moteur (40) à rotation continue selon la revendication précédente, comprenant un troisième balai de connexion (46₃) et un quatrième balai de connexion (46₄) destinés à être connectés à la deuxième borne de la source de courant continu, le troisième balai de connexion (46₃) et le quatrième balai de connexion (46₄) étant décalés de manière successive vers le premier balai de connexion (46₁) par rapport au deuxième balai de connexion (46₂), en suivant la circonférence du collecteur (45).

13. Procédé de dégivrage d'une vitre (10) de véhicule, ledit véhicule étant équipé d'un dispositif de dégivrage (1) selon l'une des revendications 1 à 7, comportant une étape 2) durant laquelle ledit balai (30) effectue au moins une descente de la position haute (PH) jusqu'à la position basse (PB) avec le moteur (40) fonctionnant à la troisième vitesse (CS) et avec le système de projection d'un liquide spécifique activé sur au moins une partie de ladite descente, de manière à étaler le liquide spécifique sur la vitre (10) entre la position haute (PH) et la position basse (PB) ou une étape 2') durant laquelle ledit balai (30) effectue au moins une montée de la position basse (PB) jusqu'à la position haute (PH) avec le moteur (40) fonctionnant à la troisième vitesse (CS) et avec le système de projection d'un liquide spécifique activé sur au moins une partie de ladite montée, de manière à étaler le liquide spécifique sur la vitre (10) entre la position basse (PB) et la position haute (PH).

14. Procédé de dégivrage d'une vitre (10) de véhicule selon la revendication précédente, dans lequel, durant l'étape 2), une montée du balai (30) de la position basse (PB) à la position haute (PH) est effectuée avant la descente avec le moteur (40) fonctionnant à la troisième vitesse (CS) et avec le système de projection d'un liquide spécifique désactivé depuis la position basse (PB) jusqu'à au moins une position proche de la position haute (PH).

15. Procédé de dégivrage d'une vitre (10) de véhicule selon la revendication 13 ou 14, dans lequel l'étape 2) est précédée d'une étape 1) durant laquelle le moteur (40) est arrêté et qui comporte une phase de projection de liquide spécifique suivie d'une phase de pause de durée donnée, de manière à dissoudre une éventuelle matière collant ledit balai (30) à la vitre (10).

## Patentansprüche

1. Vorrichtung (1) zum Enteisen und/oder Reinigen von Insekten von einer Fahrzeugfensterscheibe (10), welche eingerichtet ist, um mindestens eine Funktion des Wischens der Fensterscheibe auszuführen, und umfassend:
a. mindestens ein Wischblatt (30), das dafür geeignet ist, sich über die Fensterscheibe (30) zwischen einer tiefen Position (PB) und einer hohen Position (PH) zu verschieben,
b. einen Motor (40) mit kontinuierlicher Rotation, der eingerichtet ist, um das mindestens eine Blatt (30) in mindestens einer ersten Höhe in Rotation entsprechend einer ersten Wischgeschwindigkeit, die als schnell bezeichnet wird (HWS), und einer zweiten Höhe mit einer zweiten Wischgeschwindigkeit, die als langsam bezeichnet wird (LWS) und niedriger ist als die erste, anzutreiben, um die Funktion des Wischens auszuführen,
c. ein System zum Aufspritzen einer spezifischen Flüssigkeit zum Enteisen oder Reinigen von Insekten auf der Fensterscheibe (10),
**dadurch gekennzeichnet, dass** der Motor mit kontinuierlicher Rotation eingerichtet ist, um mit einer dritten Geschwindigkeit (CS) zu funktionieren, die als sehr langsam bezeichnet wird, die niedriger ist als die zweite Geschwindigkeit, und dadurch, dass die Vorrichtung dafür ausgelegt ist zu bewirken, dass das Blatt (30) mindestens ein Absenken von der hohen Position (PH) bis in die tiefe Position (PB) und/oder mindestens ein Anheben von der tiefen Position (PB) bis in die hohe Position (PH) ausführt, wobei der Motor (40) mit der dritten Geschwindigkeit (CS) betrieben wird, und wobei das Spritzsystem in mindestens einem Teil des Absenkens und/oder des Anhebens aktiviert wird.

2. Vorrichtung nach dem vorhergehenden Anspruch, wobei die dritte Geschwindigkeit (CS) einen Wert (Ω3) annimmt, der im Wesentlichen zwischen fünfzehn und fünfundzwanzig Zyklen pro Minute liegt, insbesondere kleiner oder gleich zwanzig Zyklen pro Minute, vorzugsweise gleich fünfzehn Zyklen pro Minute.

3. Vorrichtung nach einem der vorhergehenden Ansprüche, wobei das System zum Aufspritzen einer Flüssigkeit eingerichtet ist, um die Flüssigkeit auf die Fensterscheibe (10) im Wesentlichen entlang des mindestens einen Wischblatts (30) zu spritzen.

4. Vorrichtung nach dem vorhergehenden Anspruch, wobei das System zum Aufspritzen einer Flüssigkeit Öffnungen (15) zum Aufspritzen der Flüssigkeit auf die Scheibe (10), die von dem mindestens einen Wischblatt (30) getragen werden, oder ein Element (31), das sich mit dem Wischblatt verschiebt, umfasst.

5. Vorrichtung nach dem vorhergehenden Anspruch, wobei das System zum Aufspritzen einer spezifischen Flüssigkeit umfasst:
a. mindestens einen Behälter (3), der eine spezifische Flüssigkeit zum Enteisen oder zum Reinigen von Insekten enthält,
b. ein System von Rohrleitungen (5), das den mindestens einen Behälter (3) mit den Öffnungen (15) verbindet,
c. eine Pumpe (22), die dazu bestimmt ist, die Flüssigkeit in dem System von Rohrleitungen (5) bis zu ihrem Ausspritzen durch die Öffnungen (15) zirkulieren zu lassen.

6. Vorrichtung nach einem der vorhergehenden Ansprüche, welche außerdem eingerichtet ist, um eine zweite nicht spezifische Flüssigkeit aufzuspritzen, wenn das mindestens eine Blatt (30) von dem Motor mit kontinuierlicher Rotation angetrieben wird, der mit der ersten Wischgeschwindigkeit (HWS) oder der zweiten Wischgeschwindigkeit (LWS) betrieben wird, um eine Funktion einer Wäsche auszuführen.

7. Vorrichtung nach einem der vorhergehenden Ansprüche, umfassend ein elektronisches Steuergehäuse (60), das eingerichtet ist, um den Motor (40) und das System zum Aufspritzen der spezifischen Flüssigkeit zu steuern.

8. Motor (40) mit kontinuierlicher Rotation für eine Vorrichtung (1) zum Wischen und/oder Reinigen einer Fahrzeugfensterscheibe, wobei die Vorrichtung mindestens ein Wischblatt (30) umfasst, das dafür geeignet ist, sich über die Fensterscheibe (30) zwischen einer tiefen Position (PB) und einer hohen Position (PH) zu verschieben, wobei der Motor (40) dazu bestimmt ist, das Wischblatt (30) der Vorrichtung durch die Rotation eines Rotors (43) mit einer gegebenen Geschwindigkeit anzutreiben, wobei der Rotor mit Schaltmitteln (46₁-46₄; 45) ausgestattet ist, die dazu bestimmt sind, leitfähige Windungen (44ᵢ-44'ᵢ) des Rotors (43) von einer Gleichstromquelle zu versorgen, die ein bestimmtes Potential (U) festlegt, wobei die Schaltmittel eingerichtet sind, den Motor gemäß einer endlichen Anzahl bestimmter Geschwindigkeitshöhen zu betreiben, wobei der Motor derart ausgelegt ist, dass die Geschwindigkeitshöhen mindestens eine erste Höhe, die einer ersten Wischgeschwindigkeit entspricht, die als schnell bezeichnet wird (HWS), und eine zweite Höhe mit einer zweiten Wischgeschwindigkeit, die als langsam bezeichnet wird (LWS) und kleiner ist als die erste, umfassen, **dadurch gekennzeichnet, dass** die Höhen mindestens eine dritte Höhe umfassen, die einer dritten Geschwindigkeit (CS) entspricht, die kleiner ist als die zweite Geschwindigkeit.

9. Motor (40) mit kontinuierlicher Rotation nach dem vorhergehenden Anspruch, welcher derart ausgelegt ist, dass die dritte Geschwindigkeit (CS) einen Wert (Ω3) annimmt, der im Wesentlichen zwischen fünfzehn und fünfundzwanzig Zyklen pro Minute liegt, insbesondere kleiner oder gleich zwanzig Zyklen pro Minute, vorzugsweise gleich fünfzehn Zyklen pro Minute.

10. Motor (40) mit kontinuierlicher Rotation nach einem der Ansprüche 8 bis 9, welcher derart ausgelegt ist, dass die zweite Geschwindigkeit (LWS) einen Wert (Ω2) von mindestens gleich dreißig Zyklen pro Minute annimmt.

11. Motor (40) mit kontinuierlicher Rotation nach einem der Ansprüche 8 bis 10, wobei die Steuermittel einen Kollektor (45) umfassen, der mit leitfähigen Windungen (44i-44'i) des Rotors (43) und Verbindungsblättern verbunden ist, die dazu bestimmt sind, mit der Gleichstromquelle verbunden zu werden, und die Funktion haben, einen Strom zu dem Kollektor (45) zu übertragen, wobei ein erstes (46₁) und ein zweites (46₂) Verbindungsblatt einander diametral gegenüberliegen, und wobei der Motor (40) eingerichtet ist, um mit der dritten Geschwindigkeit (CS) betrieben zu werden, wenn das erste (46₁) und zweite (46₂) Blatt jeweils mit einem ersten und einem zweiten Anschluss der Gleichstromquelle verbunden sind.

12. Motor (40) mit kontinuierlicher Rotation nach dem vorhergehenden Anspruch, umfassend ein drittes Verbindungsblatt (46₃) und ein viertes Verbindungsblatt (46₄), die dazu bestimmt sind, mit dem zweiten Anschluss der Gleichstromquelle verbunden zu werden, wobei das dritte Verbindungsblatt (46₃) und das vierte Verbindungsblatt (46₄) aufeinanderfolgend zu dem ersten Verbindungsblatt (46₁) in Bezug auf das zweite Verbindungsblatt (46₂), dem Umfang des Kollektors (45) folgend, versetzt sind.

13. Verfahren zum Enteisen einer Fahrzeugfensterscheibe (10), wobei das Fahrzeug mit einer Vorrichtung (1) zum Enteisen nach einem der Ansprüche 1 bis 7 ausgestattet ist, umfassend einen Schritt 2), in dem das Blatt (30) mindestens ein Absenken von der hohen Position (PH) bis in die tiefe Position (PB) ausführt, wobei der Motor (40) mit der dritten Geschwindigkeit (CS) betrieben wird, und wobei das System zum Aufspritzen einer spezifischen Flüssigkeit in mindestens einem Teil des Absenkens aktiviert wird, um die spezifische Flüssigkeit auf der Fensterscheibe (10) zwischen der hohen Position (PH) und der tiefen Position (PB) zu verteilen, oder einen Schritt 2'), in dem das Blatt (30) mindestens ein Anheben von der tiefen Position (PB) bis in die hohe Position (PH) ausführt, wobei der Motor (40) mit der dritten Geschwindigkeit (CS) betrieben wird, und wobei das System zum Aufspritzen einer spezifischen Flüssigkeit in mindestens einem Teil des Anhebens aktiviert wird, um die spezifische Flüssigkeit auf der Fensterscheibe (10) zwischen der tiefen Position (PB) und der hohen Position (PH) zu verteilen.

14. Verfahren zum Enteisen einer Fahrzeugfensterscheibe (10) nach dem vorhergehenden Anspruch, wobei in dem Schritt 2) ein Anheben des Blatts (30) von der tiefen Position (PB) in die hohe Position (PH) vor dem Absenken ausgeführt wird, wobei der Motor (40) mit der dritten Geschwindigkeit (CS) betrieben wird, und wobei das System zum Aufspritzen einer spezifischen Flüssigkeit von der tiefen Position (PB) bis in mindestens eine Position nahe bei der hohen Position (PH) deaktiviert wird.

15. Verfahren zum Enteisen einer Fahrzeugfensterscheibe (10) nach Anspruch 13 oder 14, wobei dem Schritt 2) ein Schritt 1) vorausgeht, in dem der Motor (40) angehalten wird, und der eine Phase des Aufspritzens der spezifischen Flüssigkeit umfasst, gefolgt von einer Pausephase mit gegebener Dauer, um ein mögliches Material zu lösen, welches das Blatt (30) an die Fensterscheibe (10) klebt.

## Claims

1. A device (1) for de-icing and/or cleaning insects from a vehicle window (10) arranged to perform at least one window wiping function and comprising:
a. at least one wiper (30) capable of being displaced over said window (30) between a low position (PB) and a high position (PH),
b. a continuous-rotation motor (40) arranged to rotationally drive said at least one wiper (30) according to at least one first level corresponding to a first, so-called high wiping speed (HWS), and a second level corresponding to a second, so-called low wiping speed (LWS) and lower than the first, so as to perform the sweep function,
c. a system for spraying a specific liquid, for de-icing or for cleaning insects, onto the window (10),
**characterized in that** the continuous-rotation motor is arranged so as to operate at a third, so-called very slow speed (CS), lower than the second speed, and **in that** the device is configured to cause said wiper (30) to perform at least one descent from the high position (PH) to the low position (PB) and/or at least one climb from the low position (PB) to the high position (PH) with the motor (40) operating at the third speed (CS) and with said spraying system activated over at least a part of said descent and/or climb.

2. The device as claimed in the preceding claim, in which the third speed (CS) takes a value (Ω3) lying substantially between fifteen and twenty five cycles per minute, more particularly, lower than or equal to twenty cycles per minute, preferably equal to fifteen cycles per minute.

3. The device as claimed in one of the preceding claims, in which the liquid spraying system is arranged to spray said liquid onto the window (10) substantially along said at least one wiper (30).

4. The device as claimed in the preceding claim, in which the liquid spraying system comprises orifices (15) for spraying said liquid onto the window (10) borne by said at least one wiper (30) or an element (31) being displaced with said wiper.

5. The device as claimed in the preceding claim, in which the specific liquid spraying system comprises:
a. at least one tank (3) containing a specific liquid, for de-icing or cleaning insects,
b. a system of pipelines (5) linking said at least one tank (3) to the orifices (15),
c. a pump (22) intended to make said liquid circulate in the system of pipelines (5) to its ejection through said orifices (15).

6. The device as claimed in one of the preceding claims, further arranged to spray a second, non-specific liquid when said at least one wiper (30) is driven by said continuous-rotation motor operating at the first wiping speed (HWS) or the second wiping speed (LWS), so as to perform a washing function.

7. The device as claimed in one of the preceding claims, comprising an electronic control unit (60) arranged to control said motor (40) and said specific liquid spraying system.

8. A continuous-rotation motor (40) for a device (1) for wiping and cleaning a vehicle window, said device comprising at least one wiper (30) capable of being displaced over said window (30) between a low position (PB) and a high position (PH), said motor (40) being intended to drive said wiper (30) of said device by the rotation of a rotor (43) at a given speed, said rotor being equipped with switching means (46₁-46₄; 45), intended to power conductive turns (44ᵢ-44'ᵢ) of the rotor (43) from a direct current source setting a determined potential (U), said switching means being arranged to make said motor operate according to a finite number of determined speed levels, said motor being configured for said speed levels to include at least one first level corresponding to a first, so-called high wiping speed (HWS), and a second level corresponding to a second, so-called low wiping speed (LWS) and lower than the first, **characterized in that** said levels include at least one third level corresponding to a third speed (CS), lower than the second speed.

9. The continuous-rotation motor (40) as claimed in the preceding claim, configured in such a way that the third speed (CS) takes a value (Ω3) lying substantially between fifteen and twenty five cycles per minute, more particularly, lower than or equal to twenty cycles per minute, preferably equal to fifteen cycles per minute.

10. The continuous-rotation motor (40) as claimed in any one of claims 8 to 9, configured in such a way that the second speed (LWS) takes a value (Ω2) at least equal to thirty cycles per minute.

11. The continuous-rotation motor (40) as claimed in one of claims 8 to 10, in which said switching means comprise a commutator (45) linked to the conductive turns (44ᵢ-44'ᵢ) of the rotor (43) and connecting brushes intended to be linked to said direct current source and whose function is to transmit a current to the commutator (45), a first (46₁) and a second (46₂) connecting brush being diametrically opposite and the motor (40) being arranged to operate at the third speed (CS) when said first (46₁) and second (46₂) connecting brushes are connected respectively to a first terminal and a second terminal of said direct current source.

12. The continuous-rotation motor (40) as claimed in the preceding claim, comprising a third connecting brush (46₃) and a fourth connecting brush (46₄) intended to be connected to the second terminal of the direct current source, the third connecting brush (46₃) and the fourth connecting brush (46₄) being offset successively toward the first connecting brush (46₁) relative to the second connecting brush (46₂), following the circumference of the commutator (45).

13. A method for de-icing a vehicle window (10), said vehicle being equipped with a de-icing device (1) as claimed in one of claims 1 to 7, comprising a step 2) during which said wiper (30) performs at least one descent from the high position (PH) to the low position (PB) with the motor (40) operating at the third speed (CS) and with the system for spraying a specific liquid activated over at least a part of said descent, so as to spread the specific liquid over the window (10) between the high position (PH) and the low position (PB) or a step 2') during which said wiper (30) performs at least one climb from the low position (PB) to the high position (PH) with the motor (40) operating at the third speed (CS) and with the system for spraying a specific liquid activated over at least a part of said climb, so as to spread the specific liquid over the window (10) between the low position (PB) and the high position (PH).

14. The method for de-icing a vehicle window (10) as claimed in the preceding claim, in which, during the step 2), a climb of the wiper (30) from the low position (PB) to the high position (PH) is performed before the descent with the motor (40) operating at the third speed (CS) and with the system for spraying a specific liquid deactivated from the low position (PB) to at least a position close to the high position (PH).

15. The method for de-icing a vehicle window (10) as claimed in claim 13 or 14, in which the step 2) is preceded by a step 1) during which the motor (40) is stopped and which comprises a specific liquid spraying phase followed by a pause phase of given duration, so as to dissolve any matter sticking said wiper (30) to the window (10).
